# EUROPEAN PATENT APPLICATION

(11) **EP 4 653 989 A1**
(43) Date of publication of application: **26.11.2025**
(21) Application number: 24775165.4
(22) Date of filing: 19.03.2024
(51) Int. Cl.: G06F 3/041, G06F 3/0354, G06F 3/04817, G06F 3/04842, G06F 3/04812

(54) **ELECTRONIC DEVICE THAT PROCESSES INPUT OF STYLUS PEN, AND OPERATING METHOD THEREOF**

(30) Priority: 20.03.2023 KR 20230036117; 19.05.2023 KR 20230064712
(71) Applicant: Samsung Electronics Co., Ltd., Suwon-si, Gyeonggi-do 16677 (KR)
(72) Inventor: SHIN, Boosun, Suwon-si, Gyeonggi-do 16677 (KR); KWON, Jinhee, Suwon-si, Gyeonggi-do 16677 (KR); KIM, Jeonghyo, Suwon-si, Gyeonggi-do 16677 (KR); KIM, Hyunjung, Suwon-si, Gyeonggi-do 16677 (KR); PARK, Junu, Suwon-si, Gyeonggi-do 16677 (KR); PARK, Hyungkun, Suwon-si, Gyeonggi-do 16677 (KR); LEE, Sookkyung, Suwon-si, Gyeonggi-do 16677 (KR); LIM, Eunhae, Suwon-si, Gyeonggi-do 16677 (KR); HONG, Kyungwha, Suwon-si, Gyeonggi-do 16677 (KR)
(74) Representative: Nederlandsch Octrooibureau
(86) International application number: PCT/KR2024/003413
(87) International publication number: WO 2024/196117

(57) **Abstract**

According to an embodiment, an electronic device comprises: a display; and a processor electrically connected to the display, wherein the processor may: display a first object through the display; detect a first input of a stylus pen with respect to the first object; obtain a first tilt of the stylus pen while the first input is maintained; and further display a second object related to the first object on the basis of the first tilt being included in a first range.

## Description

### [Technical Field]

An embodiment of the disclosure relates to an electronic device for processing input from a stylus pen and a method for operating the same.

### [Background Art]

An electronic device is developed to receive various inputs from a user through a specified input device (e.g., a stylus pen) connected to the electronic device via wireless communication. The electronic device is capable of identifying a location on the electronic device designated by the input device having a pen function (which may be referred to by the term "stylus pen" for ease of description in the disclosure) and performing a function corresponding thereto.

The electronic device may detect a magnetic field generated from the stylus pen by using electromagnetic resonance (hereinafter, referred to as EMR). The electronic device may identify the position of the stylus pen, based on the induced electromotive force generated by the magnetic field for each channel.

The stylus pen may be connected to an electronic device via short-range communication (e.g., Bluetooth Low Energy (BLE)). The stylus pen may transmit information about the pressed state of a button placed on the housing of the stylus pen to the electronic device via short-range communication, and the electronic device may perform a designated operation based on the received information.

### [Detailed Description of the Invention]

### [Technical Solution]

According to an embodiment, an electronic device may include a display and at least one processor electrically connected to the display.

According to an embodiment, the at least one processor may display a first object via the display.

According to an embodiment, the at least one processor may detect a first input of a stylus pen regarding the first object.

According to an embodiment, the at least one processor may obtain a first tilt of the stylus pen while the first input is maintained.

According to an embodiment, the at least one processor may further display a second object related to the first object, based on the first tilt being included in a first range.

According to an embodiment, a method of controlling an electronic device may include displaying a first object.

According to an embodiment, the method of controlling the electronic device may include detecting a first input of a stylus pen regarding the first object.

According to an embodiment, the method of controlling the electronic device may include obtaining a first tilt of the stylus pen while the first input is maintained.

According to an embodiment, the method of controlling the electronic device may include further displaying a second object related to the first object, based on the first tilt being included in a first range.

According to an embodiment, in a non-transitory computer-readable recording medium storing one or more programs, the one or more programs may include instructions which cause an electronic device including a display and at least one processor to display a first object via the display

According to an embodiment, the one or more programs may include instructions which cause the electronic device to detect a first input of a stylus pen regarding the first object.

According to an embodiment, the one or more programs may include instructions which cause the electronic device to obtain a first tilt of the stylus pen while the first input is maintained.

According to an embodiment, the one or more programs may include instructions which cause the electronic device to further display a second object related to the first object, based on the first tilt being included in a first range.

### [Brief Description of Drawings]

FIG. 1 is a block diagram of an electronic device in a network environment according to an embodiment.
FIG. 2 is a perspective view of an electronic device including a stylus pen according to an embodiment.
FIG. 3 is a block diagram illustrating a stylus pen according to an embodiment.
FIG. 4 is a block diagram of an electronic device according to an embodiment.
FIG. 5 illustrates the operation of an electronic device based on the tilt of a stylus pen according to an embodiment.
FIG. 6A illustrates the tilt direction of a stylus pen according to an embodiment.
FIG. 6B illustrates the operation of an electronic device based on the tilt direction of a stylus pen according to an embodiment.
FIG. 6C illustrates the operation of an electronic device based on the tilt direction of a stylus pen according to an embodiment.
FIG. 6D illustrates the operation of an electronic device based on the tilt direction of a stylus pen according to an embodiment.
FIG. 7A illustrates the operation of an electronic device based on the tilt direction of a stylus pen according to an embodiment.
FIG. 7B illustrates the operation of an electronic device based on the direction and angle of tilt of a stylus pen according to an embodiment.
FIG. 7C illustrates the operation of an electronic device based on the direction and angle of tilt of a stylus pen according to an embodiment.
FIG. 8A illustrates the operation of an electronic device based on the tilt direction of a stylus pen according to an embodiment.
FIG. 8B illustrates the operation of an electronic device based on the tilt angle of a stylus pen according to an embodiment.
FIG. 9 illustrates the operation of an electronic device based on the direction and angle of tilt of a stylus pen according to an embodiment.
FIG. 10A illustrates the operation of an electronic device based on the direction and angle of tilt of a stylus pen according to an embodiment.
FIG. 10B illustrates the operation of an electronic device based on the direction and angle of tilt of a stylus pen according to an embodiment.
FIG. 11A illustrates the operation of an electronic device based on the direction and angle of tilt of a stylus pen according to an embodiment.
FIG. 11B illustrates the operation of an electronic device based on the direction and angle of tilt of a stylus pen according to an embodiment.
FIG. 12 illustrates the operation of an electronic device based on the direction and angle of tilt of a stylus pen according to an embodiment.
FIG. 13 illustrates the operation of an electronic device based on the direction and angle of tilt of a stylus pen according to an embodiment.

### [Mode for Carrying out the Invention]

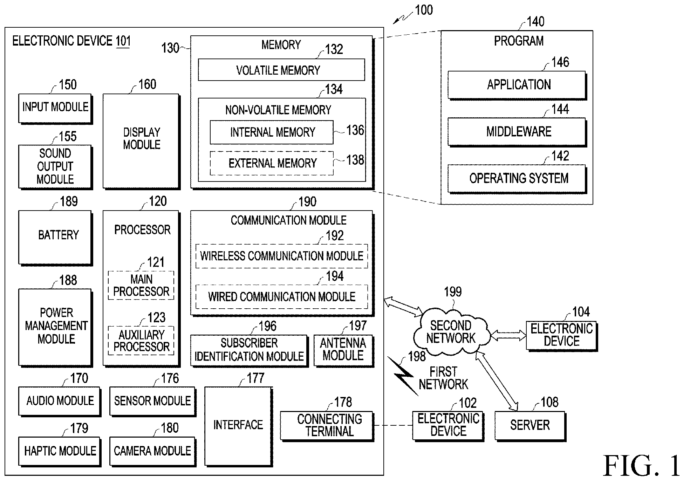

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

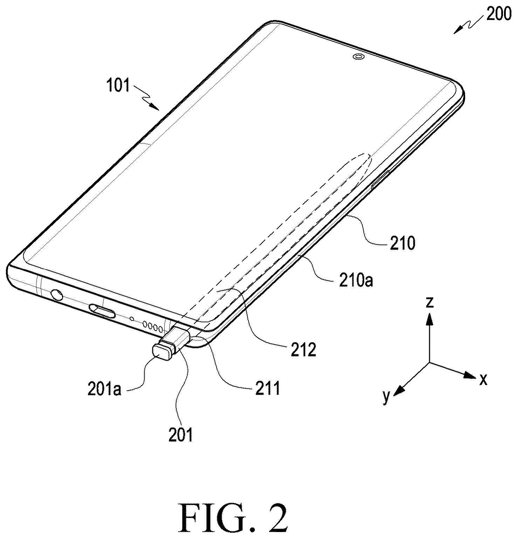

FIG. 2 is a perspective view 200 of an electronic device 101 including a stylus pen 201 (e.g., the electronic device 102 in FIG. 1) according to various embodiments. According to an embodiment, the stylus pen 201 may correspond to the input module 150 in FIG. 1 rather than the electronic device 102 in FIG. 1.

Referring to FIG. 2, according to an embodiment, the electronic device 101 may include the configuration illustrated in FIG. 1, and may include a structure into which the stylus pen 201 may be inserted. The electronic device 101 may include a housing 210, wherein a portion of the housing 210, such as a portion of a side surface 210a, may include a hole 211. The electronic device 101 may include a first inner space 212, which is an accommodation space connected to the hole 211, and the stylus pen 201 may be inserted into the first inner space 212. According to the illustrated embodiment, the stylus pen 201 may include a pressable first button 201a at one end thereof to facilitate removal of the stylus pen 201 from the first inner space 212 of the electronic device 101. When the first button 201a is pressed, a rebound mechanism configured in association with the first button 201a (e.g., a rebound mechanism by at least one elastic member (e.g., a spring)) may be activated, thereby ejecting the stylus pen 201 from the first inner space 212.

According to an embodiment, the electronic device 101 may include a structure that allows the stylus pen 201 to be attached to the electronic device 101. For example, the electronic device 101 may include at least one magnetic material positioned adjacent to an attachment region to allow the stylus pen 201 to be attached to the exterior of the housing 210. The stylus pen 201 may be attached to the exterior of the housing 210 of the electronic device 101 via the at least one magnetic material.

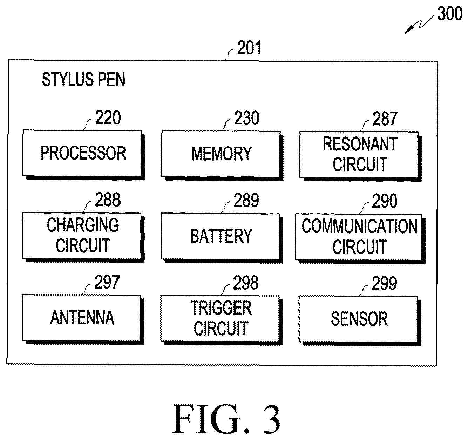

FIG. 3 is a block diagram 300 illustrating a stylus pen (e.g., the stylus pen 201 in FIG. 2) according to an embodiment.

Referring to FIG. 3, according to an embodiment, the stylus pen 201 may include a processor 220, memory 230, a resonant circuit 287, a charging circuit 288, a battery 289, a communication circuit 290, an antenna 297, trigger circuit 298, and/or a sensor 299. In some embodiments, the processor 220, at least a portion of the resonant circuit 287, and/or at least a portion of the communication circuit 290 of the stylus pen 201 may be configured on a printed circuit board or in the form of a chip. The processor 220, the resonant circuit 287, and/or the communication circuit 290 may be electrically connected to the memory 230, the charging circuit 288, the battery 289, the antenna 297, the trigger circuit 298, and/or the sensor 299.

According to an embodiment, the processor 220 may include a generic processor configured to execute a customized hardware module or software (e.g., an application program). The processor 220 may include a software component (a program) or a hardware component (function) that includes at least one of various sensors provided in the stylus pen 201, a data measurement module, an input/output interface, a module for managing the state or environment of the stylus pen 201, or a communication module. The processor 220 may include, for example, one of hardware, software, or firmware, or a combination of two or more thereof. According to an embodiment, the processor 220 may be configured to transmit information indicating a pressed state of a button (e.g., a button 337), sensing information obtained by the sensor 299, and/or information (e.g., information related to the position of the stylus pen 201) calculated based on the sensing information to the electronic device 101 via the communication circuit 290.

According to an embodiment, the resonant circuit 287 may resonate based on an electromagnetic field signal generated by a digitizer (e.g., the display module 160) of the electronic device 101, and may emit an electromagnetic resonance (EMR) input signal (or, a magnetic field) through resonance. The electronic device 101 may use the electro-magnetic resonance input signal to identify the position of the stylus pen 201 on the electronic device 101. For example, the electronic device 101 may identify the position of the stylus pen 201 based on the magnitude of induced electromotive force (e.g., output current) generated by the electromagnetic resonance input signal in each of multiple channels (e.g., multiple loop coils) in the digitizer. Meanwhile, although the electronic device 101 and stylus pen 201 have been described as operating based on the EMR method as described above, this is merely illustrative, and the electronic device 101 may also generate signals based on an electric field by using an electrically coupled resonance (ECR) method. The resonant circuit of the stylus pen 201 may be resonated by an electric field. The electronic device 101 may identify a potential in multiple channels (e.g., electrodes) due to the resonance in the stylus pen 201, and may identify a position of the stylus pen 201 based on the potential. The stylus pen 201 may be implemented in an active electrostatic (AES) manner, and those skilled in the art will understand that the type of implementation is not limited. Additionally, the electronic device 101 may detect the stylus pen 201 based on a change in capacitance (self-capacitance or mutual capacitance) associated with at least one electrode of a touch panel. In this case, the stylus pen 201 may not include a resonant circuit. In the disclosure, the term "panel" or "sensing panel" may be used to include a digitizer and a touch screen panel (TSP).

According to an embodiment, the memory 230 may store information related to the operation of the stylus pen 201. For example, the information may include information for communicating with the electronic device 101 and frequency information related to the input operation of the stylus pen 201. Additionally, the memory 230 may store a program (or an application, an algorithm, or a processing loop) for calculating information about the position of the stylus pen 201 (e.g., coordinate information and/or displacement information) from sensing data from the sensor 299. The memory 230 may also store a communication stack of the communication circuit 290. Depending on the implementation, the communication circuit 290 and/or the processor 220 may include dedicated memory.

According to an embodiment, the resonant circuit 287 may include a coil (or, an inductor) and/or a capacitor. The resonant circuit 287 may resonate based on an input electric and/or magnetic field (e.g., an electric and/or magnetic field generated by the digitizer of the electronic device 101). When the stylus pen 201 transmits a signal by an EMR method, the stylus pen 201 may generate a signal including a resonant frequency based on an electromagnetic field generated by an inductive panel of the electronic device 101. When the stylus pen 201 transmits a signal by an AES method, the stylus pen 201 may generate a signal by using capacity coupling with the electronic device 101. When the stylus pen 201 transmits a signal by an ECR method, the stylus pen 201 may generate a signal including a resonant frequency based on an electric field generated by a capacitive device of the electronic device. According to an embodiment, the resonant circuit 287 may be used to change the intensity or frequency of an electromagnetic field based on a user's manipulation state. For example, the resonant circuit 287 may provide various frequencies for recognizing a hovering input, a drawing input, a button input, or an erasing input. For example, the resonant circuit 287 may provide various resonant frequencies depending on the connection combination of multiple capacitors, or may provide various resonant frequencies based on variable inductors and/or variable capacitors.

According to an embodiment, when the charging circuit 288 is connected to the resonant circuit 287 based on a switching circuit, a resonant signal generated by the resonant circuit 287 may be rectified into a direct current signal and provided to the battery 289. According to an embodiment, the stylus pen 201 may use the voltage level of the direct current signal sensed in the charging circuit 288 to identify whether the stylus pen 201 is inserted into the electronic device 101. Alternatively, the stylus pen 201 may identify whether the stylus pen 201 is inserted by identifying a pattern corresponding to the signal detected in the charging circuit 288.

According to an embodiment, the battery 289 may be configured to store power required for operation of the stylus pen 201. The battery 289 may include, for example, a lithium-ion battery or a capacitor, and may be rechargeable or replaceable. According to an embodiment, the battery 289 may be charged using power (e.g., a direct current signal (DC power)) provided from the charging circuit 288.

According to an embodiment, the communication circuit 290 may be configured to perform a wireless communication function between the stylus pen 201 and the communication module 190 of the electronic device 101. According to an embodiment, the communication circuit 290 may transmit information associated with status information, input information, and/or position of the stylus pen 201 to the electronic device 101 by using a short-range communication method. For example, the communication circuit 290 may transmit, to the electronic device 101, direction information (e.g., motion sensor data) of the stylus pen 201 obtained via the trigger circuit 298, voice information inputted via the microphone, or remaining charge information of the battery 289. For example, the communication circuit 290 may transmit, to electronic device 101, sensing data obtained from the sensor 299 and/or information associated with a position of the stylus pen 201 identified based on the sensing data. For example, the communication circuit 290 may transmit, to the electronic device 101, information about the state of a button (e.g., the button 337) provided on the stylus pen 201. In one example, the short-range communication method may include at least one of Bluetooth, Bluetooth Low Energy (BLE), NFC, and Wi-Fi direct, but the type thereof is not limited.

According to an embodiment, the antenna 297 may be used to transmit or receive signals or power to or from the outside (e.g., the electronic device 101). According to an embodiment, the stylus pen 201 may include multiple antennas 297, from which at least one antenna 297 suitable for a communication method may be selected. Through the at least one selected antenna 297, the communication circuit 290 may exchange signals or power with an external electronic device.

According to an embodiment, the trigger circuit 298 may include at least one button or sensor circuit. According to an embodiment, the processor 220 may identify the input method (e.g., touch or press) of a button on the stylus pen 201 or the type of button (e.g., an EMR button or a BLE button). According to an embodiment, the trigger circuit 298 may transmit a trigger signal to the electronic device 101 by using a button input signal or a signal via the sensor 299.

According to an embodiment, the sensor 299 may include an accelerometer, a gyro sensor, and/or a geomagnetic sensor. The accelerometer may sense information about linear motion of the stylus pen 201 and/or acceleration of the stylus pen 201 along the 3-axis, the 6-axis, and/or the 9-axis. The gyro sensor may sense information related to rotation of the stylus pen 201. The geomagnetic sensor may sense information about a direction in which the stylus pen 201 is oriented within an absolute coordinate system. According to an embodiment, the sensor 299 may include not only a sensor for measuring motion, but also a sensor capable of generating an electrical signal or a data value corresponding to an internal operational state of the stylus pen 201 or an external environmental state, for example, as at least one of a battery level detection sensor, a pressure sensor, a light sensor, a temperature sensor, and a biometric sensor. According to various embodiments, the processor 220 may transmit information obtained from the sensor 299 to the electronic device 101 via the communication circuit 290. Alternatively, the processor 220 may transmit information associated with the position of the stylus pen 201 (e.g., coordinates of the stylus pen 201 and/or displacement of the stylus pen 201) to the electronic device 101 via the communication circuit 290, based on the information obtained from the sensor 299.

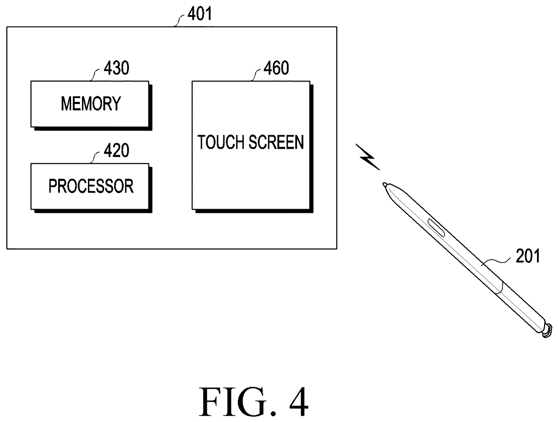

FIG. 4 is a block diagram of an electronic device according to an embodiment.

Referring to FIG. 4, an electronic device 401 may include a processor 420, memory 430, and a touch screen 460. For example, the electronic device 401 may be implemented to be identical or similar to the electronic device 101 in FIG. 1.

According to an embodiment, the processor 420 may control the overall operation of the electronic device 401. For example, the processor 420 may be implemented to be identical or similar to the processor 120 in FIG. 1.

According to an embodiment, the processor 420 may identify, via the touch screen 460 (e.g., the display module 160 in FIG. 1), a touch input generated by the stylus pen 201 or the user's hand. Alternatively, the processor 420 may identify, via the touch screen 460 (e.g., the display module 160 in FIG. 1), an input generated by an input means such as a mouse or a trackball. The processor 420 may identify the start and completion of the touch input (or the input generated by the input means). For example, the processor 420 may identify that a touch input has started when a touchdown by the stylus pen 201 or the user's hand is identified on the touch screen 460. Subsequently, the processor 420 may determine that the touch input has been completed when touch-up by the stylus pen 201 or the user's hand is identified on the touch screen 460.

According to an embodiment, the processor 420 may identify the path moved by the touch input from the start of a touch to the completion of the touch. Furthermore, the processor 420 may identify the distance moved by the touch input from the start of a touch to the completion of the touch.

According to an embodiment, the processor 420 may identify whether a gesture represented by a touch input (or an input generated by the input means) satisfies a predetermined gesture occurrence condition. For example, the processor 420 may identify a gesture represented by a touch input from among multiple predetermined gestures, based on the start, movement path, and completion of the touch input. The processor 420 may identify, based on the touch start, the touch movement, and/or the touch completion, whether the gesture represented by the touch input satisfies a gesture occurrence condition that triggers a specific gesture among multiple gestures supported by the electronic device 401. For example, the multiple gestures may include a single tap, multiple taps, hold, long press, move and hold, scroll input, fling input, movement of two touches in different directions, and/or rotation of two touches in different directions. For example, the gesture occurrence condition may be configured differently for each of the multiple gestures.

According to an embodiment, when the gesture represented by the touch input does not satisfy the gesture occurrence condition that triggers the specific gesture the processor 420 may display the handwriting (or drawing) represented by the touch input on the touch screen 460. For example, when the touch input does not represent a predetermined gesture, the processor 420 may display, on the touch screen 460, the handwriting (or drawing) input by the touch input.

According to an embodiment, when the gesture represented by the touch input satisfies the gesture occurrence condition that trigger the specific gesture, the processor 420 may identify whether the touch input satisfies at least one of a time condition, a distance condition, and a spatial condition designated for the gesture, by using the touch start point of the touch input or the end point of the previous touch input as a reference point. In other words, the processor 420 may not immediately execute a function corresponding to the specific gesture even when the gesture represented by the touch input satisfies the gesture occurrence condition. For example, the time condition may refer to a condition regarding the time at which the touch input is applied. The distance condition may refer to a condition regarding the length of the path of the touch input. The spatial condition may refer to a condition regarding whether the touch input is located inside or outside a certain space.

According to an embodiment, the reference point for determining the time condition, the distance condition, and the spatial condition specified in the gesture may be different for each gesture. For example, the reference point may be the start point of a touch or the end of a previous touch input. Alternatively, the reference point may be the start or end point of the oldest touch input among touches within the last 500 ms, a point at which the movement of a touch input first leaves a predetermined region, the start or end point of the oldest touch input among 10 most recently identified touch inputs, the start or end point of a touch input (e.g., a touch input with an x-coordinate of 1000 or more) corresponding to a data value satisfying a specific condition among data of touch inputs, or the start or end point of a touch input selected by a specific algorithm. For example, the reference point may be automatically configured by the processor 420, or may be configured by a user.

According to an embodiment, the processor 420 may determine whether to execute a function corresponding to the gesture represented by the touch input, based on whether the touch input satisfies at least one of the time condition, the distance condition, and the spatial condition designated for the specific gesture. For example, the processor 420 may execute a function corresponding to a gesture represented by a touch input when the touch input satisfies a time condition, a distance condition, and/or a spatial condition designated for the gesture. Alternatively, the processor 420 may not execute a function corresponding to a gesture represented by a touch input when the touch input does not satisfy a time condition, a distance condition, and/or a spatial condition designated for the gesture. In this case, the processor 420 may display movement (e.g., handwriting or drawing) represented by the touch input on the touch screen 460.

According to an embodiment, the processor 420 may determine whether to execute a function corresponding to a gesture represented by multiple touch inputs, based on whether the multiple touch inputs satisfy at least one of the time condition, the distance condition, and/or the spatial condition designated for the specific gesture.

According to an embodiment, for each of the multiple gestures, at least some of the time condition, the distance condition, and/or the spatial condition may be configured differently. Furthermore, for some gestures among the multiple gestures, the processor 420 may execute functions corresponding to the gestures when only some of the time condition, the distance condition, and/or the spatial conditions are satisfied.

According to an embodiment, the memory 430 may store information about a gesture occurrence condition for each of the multiple gestures. Furthermore, the memory 430 may store information about a time condition, a length condition, and/or a spatial condition for each of the multiple gestures. For example, the memory 430 may be implemented to be identical or similar to the memory 130 in FIG. 1.

Hereinafter, for ease of description, the electronic device 401 is described as performing the following operations. However, at least some of the operations performed by the electronic device 401 may be controlled by the processor 420.

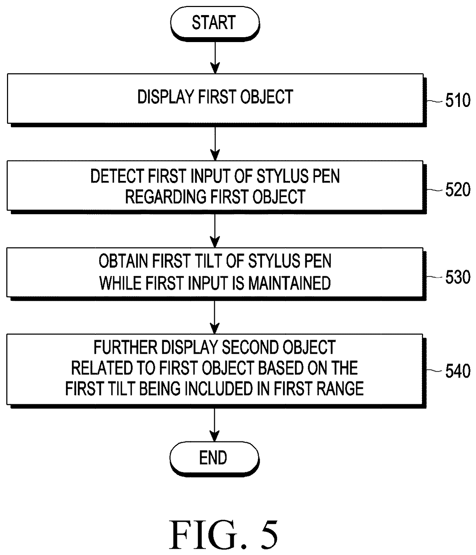

FIG. 5 illustrates operations of an electronic device based on the tilt of a stylus pen according to an embodiment.

Referring to FIG. 5, in operation 510, an electronic device (e.g., the electronic device 101 in FIG. 1 or the processor 120 in FIG. 1) may display a first object on a display (e.g., the display module 160 in FIG. 1).

According to an embodiment, the first object may include an icon for application execution, or a user interface for function execution (e.g., widgets, previous screen display (back), information provision, playback position adjustment, brightness adjustment, or volume adjustment).

According to an embodiment, in operation 520, the electronic device may detect a first input of a stylus pen (e.g., the electronic device 102 in FIG. 1, the stylus pen 201 in FIG. 2, and the stylus pen 201 in FIG. 3) regarding to the first object. According to an embodiment, the electronic device may detect the first input of a stylus pen, connected via a communication module (e.g., the communication module 190 in FIG. 1), regarding the first object. According to an embodiment, the electronic device may also detect the first input of a stylus pen, which is not connected to the communication module, regarding the first object.

According to an embodiment, the first input may include hovering over or touching the first object displayed on the display. According to an embodiment, the first input may include hovering over or touching the first object displayed on the display while pressing a button included on the stylus pen.

According to an embodiment, in operation 530, the electronic device may obtain a first tilt of the stylus pen while the first input is maintained.

According to an embodiment, when the first object includes a function related to an angle, the electronic device may obtain the first tilt of a stylus pen hovering over or touching the first object. According to an embodiment, when the first object includes the function related to the angle, the electronic device may obtain the first tilt of the stylus pen hovering over or touching the first object while the stylus pen maintains the first input regarding the first object.

According to an embodiment, the first tilt may include tilt direction and/or tilt angle information.

According to an embodiment, when the surface of the display is defined as the xy-plane, and when two points are obtained by projecting one end (e.g., the tip of the stylus pen) and the other end of the stylus pen on the xy-plane, the direction of the first tilt may include the direction of a straight line from a point corresponding to the tip of the stylus pen to a point corresponding to the other end of the stylus pen.

According to an embodiment, the angle of the first tilt may include an angle between the direction of the display (e.g., the direction of an axis perpendicular to the surface of the display) and the stylus pen, and/or an angle between the surface of the display and the stylus pen. According to an embodiment, when the surface of the display is defined as the xy-plane, and when a straight line is obtained by projecting the stylus pen onto the xy-plane, the angle of the first tilt may include an angle between the stylus pen and the obtained straight line.

According to an embodiment, the electronic device may receive information about the direction of the first tilt and/or the angle of the first tilt from the stylus pen via the communication module. For example, the electronic device may receive, from the stylus pen, the direction of the first tilt of the stylus pen and/or the angle of the first tilt of the stylus pen, obtained by a sensor (e.g., an accelerometer and/or a gyro sensor) (e.g., the sensor 299 in FIG. 3) included in the stylus pen.

According to an embodiment, the electronic device may further include at least one sensor (e.g., a touch sensor and/or a magnetic field sensor) (e.g., the sensor module 176 in FIG. 1). According to an embodiment, the electronic device may obtain the direction of the first tilt of the stylus pen and/or the angle of the first tilt thereof by using the at least one sensor.

For example, when the stylus pen includes two or more points recognizable via a touch sensor (e.g., a touch screen panel (TSP) or a digitizer) of the electronic device, the electronic device may obtain the direction of the tilt of the stylus pen and/or the angle of tilt thereof based on the distance and direction between the recognized points.

According to an embodiment, the stylus pen may include a tip electrode at the tip thereof, and may include a ring electrode spaced apart from the tip electrode and surrounding the stylus pen. According to an embodiment, the electronic device may use the touch sensor to sense point-shaped touch or hovering by the tip electrode and ring-shaped hovering by the ring electrode. According to an embodiment, the electronic device may obtain at least one of the direction of the tilt of the stylus pen or the angle of tilt thereof based on the distance and direction between the point-shaped touch or hovering and the ring-shaped hovering or based on the sensed ring shape.

For example, the electronic device may obtain the direction of the tilt of the stylus pen based on the direction between the center of a point-shaped sensing region and the center of a ring-shaped sensing region, and may obtain the angle of the tilt of the stylus pen based on the distance between the center of the point-shaped sensing region and the center of the ring-shaped sensing region.

According to an embodiment, the electronic device may identify that the stylus pen is not tilted when the shape of the ring-shaped sensing region is closer to a circle, may identify that the stylus pen is tilted in a direction with a long radius when the shape of the ring-shaped sensing area is oval, and may obtain the angle of the tilt of the stylus pen based on the length of the long radius or a ratio of the long radius to a short radius.

According to an embodiment, when the stylus pen includes a magnetic field generator recognizable via a magnetic field sensor of the electronic device, the electronic device may detect a magnetic field generated by the stylus pen to obtain an angle relative to each of the x-axis, the y-axis, and/or the z-axis, and may obtain the direction of the tilt of the stylus pen and/or the angle of tilt thereof based on the angle relative to each of the x-axis, the y-axis, and/or the z-axis.

In the above description, it has been described that the first input is detected, and then the tilt of the stylus pen is obtained while the first input is maintained. However, according to an embodiment, the electronic device may also perform operation 540 below when the first input of the stylus pen regarding the first object is detected while the tilt of the stylus pen is obtained.

According to an embodiment, in operation 540, the electronic device may further display a second object related to the first object based on the first tilt being included in a first range.

According to an embodiment, the electronic device may further display the second object related to the first object when the angle of the first tilt of the stylus pen is included in the first range while the first input of the stylus pen regarding the first object is maintained.

According to an embodiment, the electronic device may determine a position at which the second object is displayed by considering the direction of the first tilt of the stylus pen. For example, the electronic device may display the second object in a region in a direction opposite to the direction of the first tilt of the stylus pen, relative to the position of the first object.

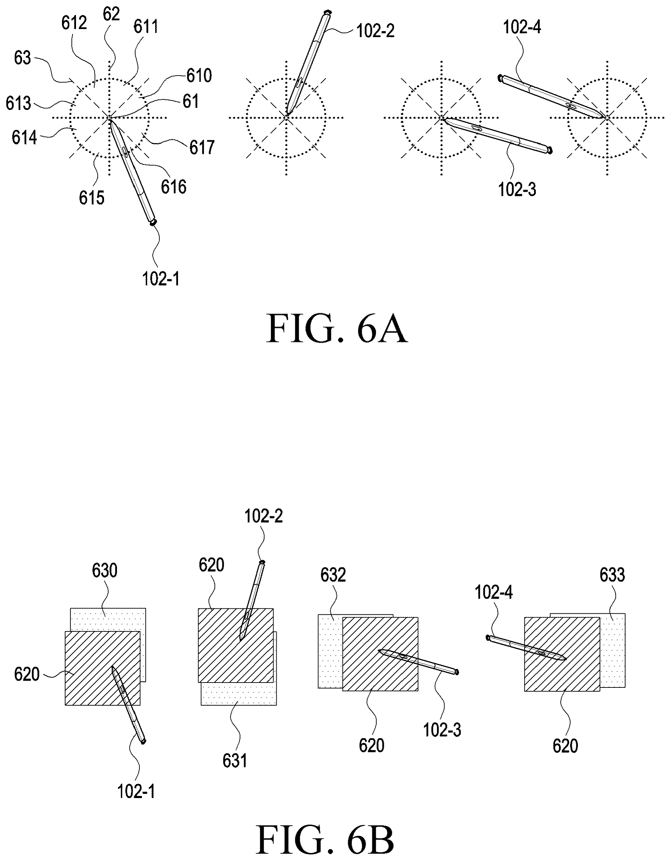

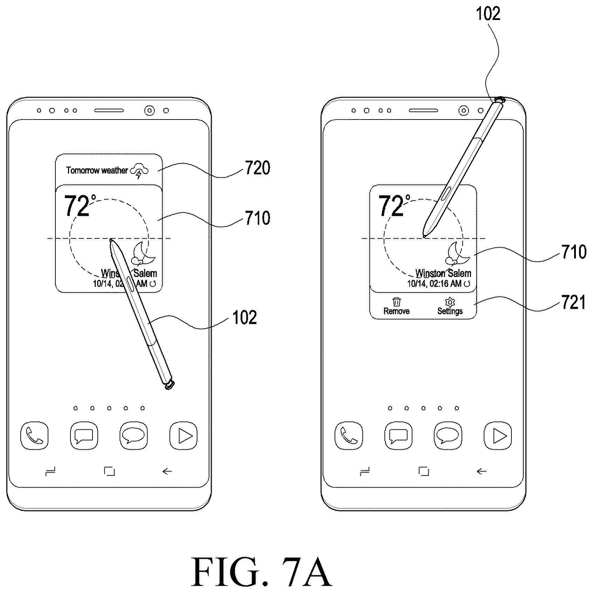

According to an embodiment, the second object may be displayed on a different layer from the first object. According to an embodiment, an example in which the second object is displayed in a region in the direction opposite to the direction of the first tilt of the stylus pen and is displayed on the different layer from the first object will be described in more detail below with reference to FIGS 6B and 7A.

According to an embodiment, the electronic device may move the second object to be farther away from the first object based on the angle of the first tilt changing to be included in a second range greater than the first range.

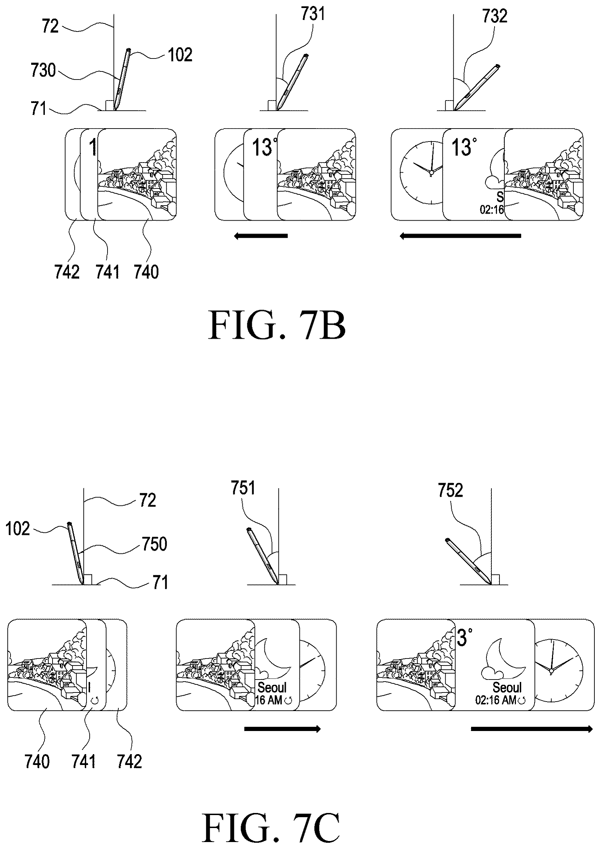

According to an embodiment, when the first object includes multiple UIs (e.g., widgets) which at least partially overlap each other, the electronic device may spread out and display the overlapped UIs as the angle of the first tilt increases. According to an embodiment, an example in which the second object is displayed in a region in a direction opposite to the direction of the first tilt of the stylus pen and the position of the second object is changed in response to a change in the angle of the first tilt will be described in more detail below with reference to FIGS. 7B and 7C.

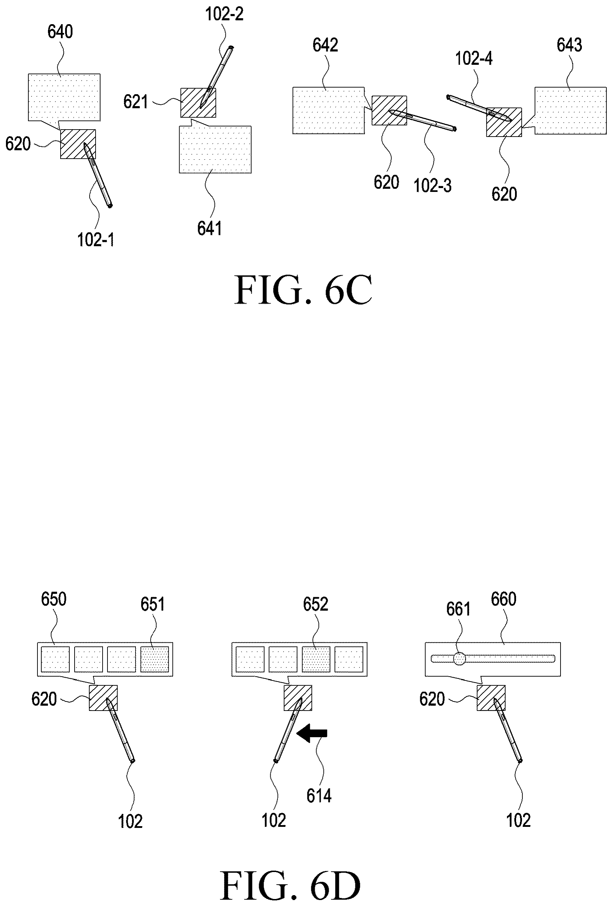

According to an embodiment, the second object may be a pop-up screen. According to an embodiment, an example in which the second object is displayed in a pop-up screen displayed in a region in a direction opposite to the direction of the first tilt of the stylus pen will be described in more detail below with reference to FIGS. 6C, 8A, 9, 10A, 11A, and 11B.

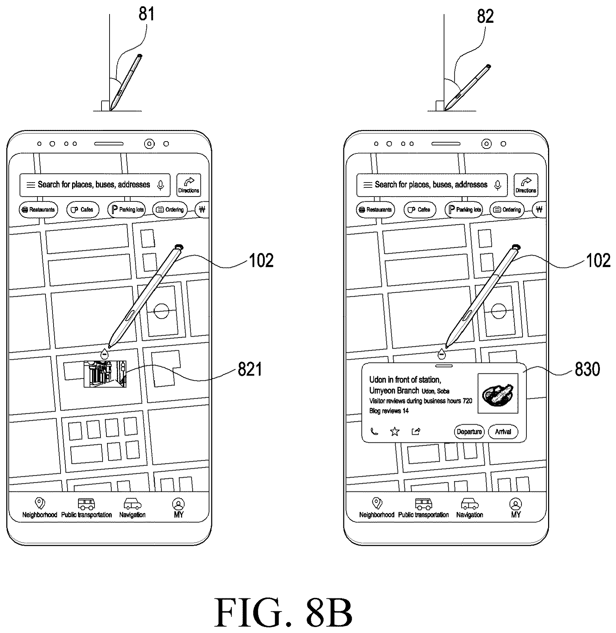

According to an embodiment, when displaying detailed information of the selected first object by using a pop-up screen, the electronic device may adjust the amount (level) of information displayed, based on the angle of the first tilt of the stylus pen. For example, the electronic device may increase the amount of content included in the second object, based on the angle of the first tilt changing to be included in the second range that is greater than the first range. According to an embodiment, an example of adjusting the amount of content displayed on the second object based on a change in the angle of the first tilt of the stylus pen will be described in more detail below with reference to FIG. 8B.

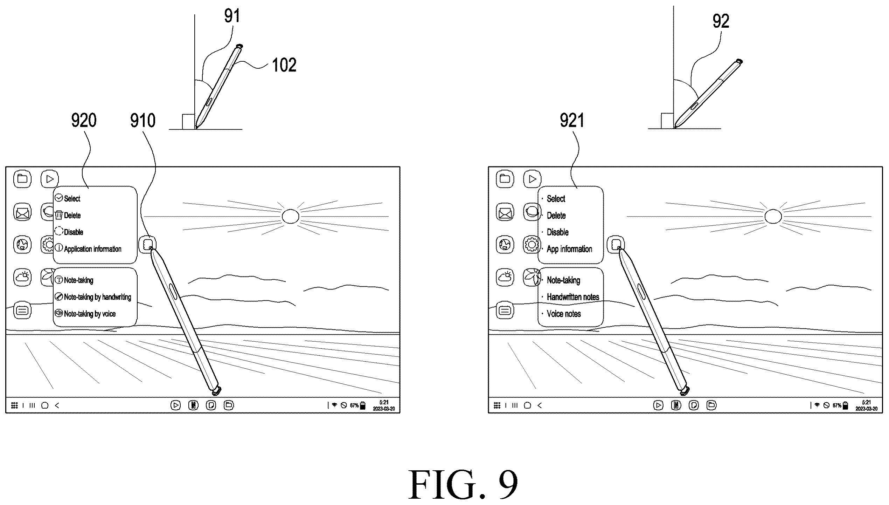

According to an embodiment, the electronic device may increase the transparency of the second object based on the angle of the first tilt of the stylus pen changing to be included in the second range that is less than the first range while the first input of the stylus pen regarding the first object is maintained. According to an embodiment, an example in which the second object is displayed in a region in a direction opposite to the direction of the first tilt of the stylus pen and the transparency of the second object is changed based on a change in the angle of the first tilt will be described in more detail below with reference to FIG. 9.

According to an embodiment, the second object may include multiple optionally selectable items. For example, when there are multiple options selectable in relation to the first object, the second object may include multiple items optionally selectable in relation to the first object. For example, the second object may include multiple playback speeds or multiple previous screens.

According to an embodiment, the electronic device may change an item to be selected from the multiple items, based on a change in the angle of the first tilt of the stylus pen and/or a change in the direction of the first tilt. For example, the electronic device may change the position of an indicator indicating the item to be selected from the multiple items, based on the change in the angle of the first tilt and/or the change in the direction of the first tilt. For example, when the angle of the first tilt and/or the direction of the first tilt are changed based on the stylus pen rotating counterclockwise, the electronic device may move the position of the indicator to the left. For example, when the angle of the first tilt and/or the direction of the first tilt are changed based on the stylus pen rotating clockwise, the electronic device may move the position of the indicator to the right. According to an embodiment, when the stylus pen rotates upwardly or downwardly, the electronic device may change the position of the indicator upwardly or downwardly. According to an embodiment, an example in which the second object includes multiple optionally selectable items will be described in more detail below with reference to FIGS. 6D, 10A, 11A, and 11B.

According to an embodiment, the first object may be related to a setting, a value of which is adjustable. For example, the first object may be a user interface related to brightness adjustment or volume adjustment.

According to an embodiment, the electronic device may adjust a value of the setting based on a change in the angle of the first tilt of the stylus pen and/or a change in the direction of the first tilt, and may display the second object related to the adjusted value of the setting.

For example, when the first input of the stylus pen regarding the first object is received, the electronic device may display a bar-shaped slider as the second object, may adjust a setting value related to the first object based on a change in the angle and/or direction of the first tilt of the stylus pen while the first input is maintained, and may change the position of a node included in the slider.

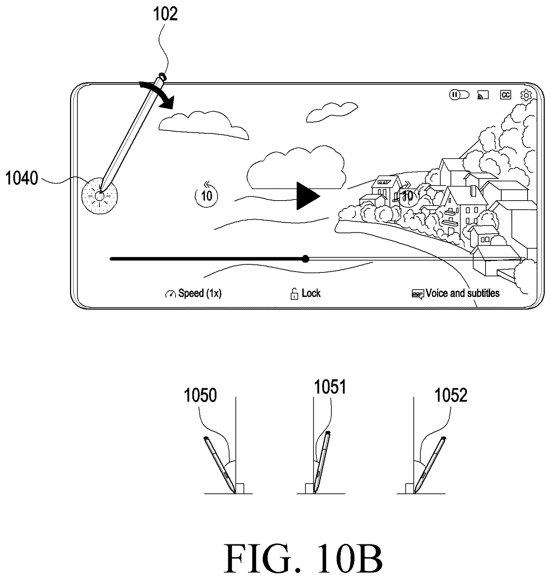

According to an embodiment, the electronic device may adjust a setting value related to the first object based on a change in the angle and/or direction of the first tilt of the stylus pen while the first input of the stylus pen regarding the first object is maintained, and display the setting value (e.g., a numerical value) as the second object. According to an embodiment, an example of adjusting the setting value based on a change in the angle and/or direction of the tilt of the stylus pen will be described in more detail below with reference to FIGS. 6D and 10B.

In this way, when the stylus pen hovers over or touches an object within the display of the electronic device, the electronic device may provide, based on the tilt of the stylus pen, an interaction capable of providing additional information to a user or executing a function, thereby enabling the continuous execution of a function in the previously performed task while minimizing the movement of the stylus pen without switching a screen.

FIG. 6A illustrates the tilt direction of a stylus pen according to an embodiment.

Referring to FIG. 6A, an electronic device (e.g., the electronic device 101 in FIG. 1 or the processor 120 in FIG. 1) may identify the x-axis and the y-axis 62 with a first object 61, touched or hovered over by stylus pens 102-1, 102-2, 102-3, and 102-4 (e.g., the electronic device 102 in FIG. 1, as the origin, the stylus pen 201 in FIG. 2, and the stylus pen 201 in FIG. 3), and may identify two diagonal axes 63 with the first object 61 as the origin.

According to an embodiment, the electronic device may be divided into eight regions based on the reference points, the x-axis and the y-axis 62 and the two diagonal axes 63, and may obtain a tilt direction of the stylus pens 102-1, 102-2, 102-3, and 102-4 among eight directions corresponding to the eight regions. For example, the eight directions may include a first direction corresponding to a first region 610 that is in contact with the x-axis among two regions included in the first quadrant of the xy-plane including the x-axis and the y-axis 62, a second direction corresponding to a second region 611 that is in contact with the y-axis among the two regions included in the first quadrant of the xy-plane, a third direction corresponding to a third region 612 that is in contact with to the y-axis of two regions included in the second quadrant of the xy-plane, a fourth direction corresponding to a fourth region 613 that is in contact with the x-axis among the two regions included in the second quadrant of the xy-plane, a fifth direction corresponding to a fifth region 614 that is in contact with to the x-axis among two regions included in the third quadrant of the xy-plane, a sixth direction corresponding to a sixth region 615 that is in contact with the y-axis among the two regions included in the third quadrant of the xy-plane, a seventh direction corresponding to a seventh region 616 that is in contact with the y-axis among two regions included in the fourth quadrant of the xy-plane, and an eighth direction corresponding to an eighth region 617 that is in contact with the x-axis among the two regions included in the fourth quadrant of the xy-plane.

For example, the tilt of the first stylus pen 102-1 may be in the seventh direction corresponding to the seventh region 616, the tilt of the second stylus pen 102-2 may be in the second direction corresponding to the second region 611, the tilt of the third stylus pen 102-3 may be in the eighth direction corresponding to the eighth region 617, and the tilt of the fourth stylus pen 102-4 may be in the fourth direction corresponding to the fourth region 613.

According to an embodiment, although FIG. 6A illustrates the direction of the stylus pen divided into eight directions, it is possible to use only the x-axis and y-axis 62 to divide the direction of the stylus pen into a total of four direction: upward and downward directions based on the x-axis, and left and right directions based on the y-axis. According to an embodiment, the direction of the stylus pen may be divided into nine or more directions.

According to an embodiment, the electronic device may display a second object as illustrated in FIGS. 6B to 6D below based on the tilt directions of the stylus pens 102-1, 102-2, 102-3, and 102-4.

FIG. 6B illustrates the operation of an electronic device based on the tilt direction of a stylus pen according to an embodiment.

Referring to FIG. 6B, the electronic device may display second objects 630, 631, 632, and 633 related to a first object 620 when the tilt of each of the stylus pens 102-1, 102-2, 102-3, and 102-4 is included in a first range while a first input of each of the stylus pens 102-1, 102-2, 102-3, and 102-4 hovering over or touching the first object 620 is maintained. For example, when the angle of the tilt of each of the stylus pens 102-1, 102-2, 102-3, and 102-4 is included in the first range while the first input of each of the stylus pens 102-1, 102-2, 102-3, and 102-4 is maintained, the electronic device may display the second objects 630, 631, 632, and 633 related to the first object 620. According to an embodiment, each of the second objects 630, 631, 632, and 633 may be displayed as a different layer from the first object 620 so as to at least partially overlap the first object 620.

According to an embodiment, the electronic device may further consider the tilt directions of the stylus pens 102-1, 102-2, 102-3, and 102-4 to determine positions where the second objects 630, 631, 632, and 633 are displayed. For example, the electronic device may display the second objects 630, 631, 632, and 633 in regions in directions opposite to the tilt directions of the stylus pens 102-1, 102-2, 102-3, and 102-4.

For example, when the tilt direction of the first stylus pen 101-1 is downward with respect to the first object 620, the electronic device may display the second object 630 above the first object 620. According to an embodiment, when the tilt direction of the second stylus pen 101-2 is upward with respect to the first object 620, the electronic device may display the second object 631 below the first object 620. According to an embodiment, when the tilt direction of the third stylus pen 101-3 is to the right with respect to the first object 620, the electronic device may display the second object 632 to the left of the first object 620. According to an embodiment, when the tilt direction of the fourth stylus pen 101-4 is to the left with respect to the first object 620, the electronic device may display the second object 633 to the right of the first object 620.

According to an embodiment, when the first object 620 includes multiple layers, the electronic device may display at least one layer, among the multiple layers of the first object 620, which was hidden from view by the topmost layer, as the second objects 630, 631, 632, and 633 if the tilt of each of the stylus pens 102-1, 102-2, 102-3, and 102-4 is included in the first range while the first input of each of the stylus pens 102-1, 102-2, 102-3, and 102-4 hovering over or touching the first object 620 is maintained.

According to an embodiment, the electronic device may further consider the tilt direction of each of the stylus pens 102-1, 102-2, 102-3, and 102-4 to display the at least one layer, which was not visible, as the second objects 630, 631, 632, and 633 in regions in the directions opposite to the tilt directions of the stylus pens 102-1, 102-2, 102-3, and 102-4.

FIG. 6C illustrates the operation of an electronic device based on the tilt direction of a stylus pen according to an embodiment.

Referring to FIG. 6C, the electronic device may display second objects 640, 641, 642, and 643 related to the first object 620 when the tilt of each of the stylus pens 102-1, 102-2, 102-3, and 102-4 is in a first range while a first input of each of the stylus pens 102-1, 102-2, 102-3, and 102-4 hovering over or touching the first object 620 is maintained. For example, when the angle of the tilt of each of the stylus pens 102-1, 102-2, 102-3, and 102-4 is included in the first range while the first input of each of the stylus pens 102-1, 102-2, 102-3, and 102-4 is maintained, the electronic device may display the second objects 640, 641, 642, and 643 related to the first object 620. According to an embodiment, the second objects 640, 641, 642, and 643 may be pop-up screens and may include additional information and/or selectable options regarding the first object 620.

According to an embodiment, the electronic device may further consider the tilt directions of the stylus pens 102-1, 102-2, 102-3, and 102-4 to determine positions where the second objects 640, 641, 642, and 643 are displayed. For example, the electronic device may display the second objects 640, 641, 642, and 643 in regions in directions opposite to the tilt directions of the stylus pens 102-1, 102-2, 102-3, and 102-4.

For example, when the tilt direction of the first stylus pen 101-1 is downward with respect to the first object 620, the electronic device may display the second object 640 above the first object 620. According to an embodiment, when the tilt direction of the second stylus pen 101-2 is upward with respect to the first object 620, the electronic device may display the second object 641 below the first object 620. According to an embodiment, when the tilt direction of the third stylus pen 101-3 is to the right with respect to the first object 620, the electronic device may display the second object 642 to the left of the first object 620. According to an embodiment, when the tilt direction of the fourth stylus pen 101-4 is to the left with respect to the first object 620, the electronic device may display the second object 643 to the right of the first object 620.

FIG. 6D illustrates the operation of an electronic device based on the tilt direction of a stylus pen according to an embodiment.

Referring to FIG. 6D, the electronic device may display second objects 650 and 660 related to the first object 620 when the tilt of a stylus pen 102 is included in a first range while a first input of the stylus pen 102 hovering over or touching the first object 620 is maintained. For example, when the angle of the tilt of the stylus pen 102 is included in the first range while the first input of the stylus pen 102 is maintained, the electronic device may display the second objects 650 and 660 related to the first object 620. According to an embodiment, the second objects 650 and 660 may be pop-up screens that include selectable options or sliders.

According to an embodiment, when there are multiple options related to the first object 620, the second object 650 may include multiple selectable options 651 and 652.

According to an embodiment, in a state in which an indicator, indicating that the rightmost first option 651 among the multiple options 651 and 652 is an option to be selected, is displayed in the first option 651 based on the tilt of the stylus pen 102 being in a first direction (e.g., a down-right direction) and at a first angle, the indicator may move from the first option 651 among the multiple options 651 and 652 to the second option 652, which is located to the left of the first option 651, as the tilt of the stylus pen 102 shifts to a second direction 614.

Thus, the electronic device may change the option to be selected from among the multiple options based on a change in angle and/or direction of the tilt of the stylus pen 102.

According to an embodiment, when the first object 620 is related to an adjustable setting, the second object 650 may include a slider 660 for adjusting the setting value (e.g., brightness, volume, or playback position) and a knob 661 indicating the current setting value.

According to an embodiment, the electronic device may adjust a setting value related to the first object 620 based on a change in the tilt direction and/or tilt angle of the stylus pen 102, and may change the position of the knob 661 based on the adjusted setting value.

FIG. 6D illustrates that, when the first object 620 is related to an adjustable setting, the electronic device displays the second object 660 including a slider if the tilt of the stylus pen 102 is included in the first range while the first input of the stylus pen 102 regarding the first object 620 is maintained. However, according to an embodiment, the electronic device may adjust a setting value related to the first object 620 based on a change in the tilt direction and/or tilt angle of the stylus pen 102 without displaying the slider, and may display the adjusted setting value (e.g., a numerical value) as the second object.

FIG. 7A illustrates the operation of an electronic device based on the tilt direction of a stylus pen according to an embodiment.

Referring to FIG. 7A, the electronic device (e.g., the electronic device 101 in FIG. 1 or the processor 120 in FIG. 1) may display second objects 720 and 721 related to a first object 710 (e.g., a widget) shown on a display (e.g., the display module 160 in FIG. 1), based on the tilt of a stylus pen 102 (e.g., the electronic device 102 in FIG. 1, the stylus pen 201 in FIG. 2, and the stylus pen 201 in FIG. 3) being included in a first range while a first input of the stylus pen 102 hovering over or touching the first object 710 is maintained.

According to an embodiment, the electronic device may further consider the tilt direction of the stylus pen 102 to determine positions where the second objects 720 and 721 are displayed. For example, the electronic device may display the second objects 720 and 721 in regions in a direction opposite to the tilt direction of the stylus pen 102.

For example, when the direction of the stylus pen 102 is a downward direction relative to the first object 710, the electronic device may display the second object 720 related to the first object 710 on the top of the first object 710.

According to an embodiment, when the direction of the stylus pen 102 is in an upward direction relative to the first object 710, the electronic device may display the second object 721 related to the first object 710 on the bottom of the first object 710.

According to an embodiment, the second objects 720 and 721 may include summary information or a simple manipulation mode related to the first object 710.

According to an embodiment, the electronic device may provide (e.g., output, display, playback, execute) different types of content depending on the direction in which the second objects 720 and 721 are displayed.

For example, the electronic device may include summary information related to the first object 710 in the second object 720 displayed on the top of the first object 710, and may include a simple manipulation mode (e.g., delete or set) of the first object 710 in the second object 721 displayed on the bottom of the first object 710.

According to an embodiment, examples of the first object and the second object may be as shown in Table 1 below.

**[Table 1]**

| **Apps** | **Set Widget (First object)** | **Second object when tilt is first range** | **Second object when tilt is second range** |
|---|---|---|---|
| Weather | Weather | Weather forecast | Remove / Settings |
| | | Yesterday, Tomorrow weather | |
| Calendar | Month | List | |
| Clock | Digital clock / Analog clock | Alarm: Show only when there are set alarms. | |
| | | Show "No alarms set" when no alarms are set | |
| | Alarm | Timer | |
| Notes | Note shortcut | Note creator | |
| Contacts | Contact | Call / Message | |
| Digital wellbeing | Screen time | App timers | |
| Gallery | Album or Story | Pictures | Details |

According to an embodiment, the content provided based on the tilt direction of the stylus pen 102 may be set by the manufacturer at the time of manufacture of the electronic device. In an embodiment, the content provided based on the tilt direction of the stylus pen may also be set by an input via a user interface through which the content can be selected or changed. As described above, the electronic device may provide information and/or functions related to an object based on the tilt of the stylus pen without entering an application related to the object.

According to an embodiment, when the tilt of the stylus pen changes, the position at which the second object is displayed may be changed. This will be described below with reference to FIGS. 7B and 7C.

FIG. 7B illustrates the operation of an electronic device based on the tilt direction and tilt angle of a stylus pen according to an embodiment.

FIG. 7C illustrates the operation of an electronic device based on the tilt direction and tilt angle of a stylus pen according to an embodiment.

Referring to FIGS. 7B and 7C, the electronic device may display second objects 741 and 742 related to a first object 740 when the tilt angle of the stylus pen 102 is first ranges 730 and 750. According to an embodiment, the tilt angle of the stylus pen 102 may be an angle between a direction 72 of a display plane 71 and the stylus pen 102. For example, the direction 72 of the display plane 71 may be a direction orthogonal to all straight lines included in the display plane 71.

According to an embodiment, when the first object 740 includes multiple layers, the electronic device may display at least one layer hidden from view by the topmost layer of the first object 740 as the second objects 741 and 742 when the tilt angle of the stylus pen 102 is the first ranges 730 and 750.

According to an embodiment, as illustrated in FIG. 7, the second objects 741 and 742 may be displayed to the left of the first object 740 as the tilt direction of the stylus pen 102 is to the right.

According to an embodiment, the electronic device may move the position of the second objects 741 and 742, based on a change in the tilt angle of the stylus pen 102.

For example, when the tilt angle of the stylus pen 102 changes from the first range 730 to a second range 731 that is greater than the first range 730, the electronic device may move the second objects 741 and 742 to the left so as to be farther away from the first object 740.

For example, when the tilt angle of the stylus pen 102 changes from the second range 731 to a third range 732 that is greater than the second range 731, the electronic device may move the second objects 741 and 742 to the left so as to be farther away from the first object 740.

According to an embodiment, as illustrated in FIG. 7C, the second objects 741 and 742 may be displayed to the right of the first object 740 as the tilt direction of the stylus pen 102 is to the left.

According to an embodiment, the electronic device may move the position of the second objects 741 and 742 based on a change in the tilt angle of the stylus pen 102.

For example, when the tilt angle of the stylus pen 102 changes from the first range 750 to a second range 751 that is greater than the first range 750, the electronic device may move the second objects 741 and 742 to the right so as to be farther away from the first object 740.

For example, when the tilt angle of the stylus pen 102 changes from the second range 751 to a third range 752 that is greater than the second range 751, the electronic device may move the second objects 741 and 742 to the right so as to be farther away from the first object 740.

Thus, as the tilt angle of the stylus pen 102 increases, the overlapping portions between the first object 740 and the second objects 741 and 742 may be reduced or eliminated, and thus, information included the second objects 741 and 742 may be further displayed.

In FIGS. 7B and 7C, only an embodiment in which the tilt angle of the stylus pen 102 increases is illustrated, but according to an embodiment, when the tilt angle of the stylus pen 102 decreases, the second objects 741 and 742 may be moved to be closer to the first object 740.

In FIGS. 7B and 7C, the second objects 741, 742 are shown as including two layers, but according to an embodiment, the second objects may be one layer, and a third object may be additionally displayed as the tilt angle of the stylus pen 102 increases. According to an embodiment, the third object may be deleted after the tilt angle of the stylus pen 102 decreases after the third object has been additionally displayed as the tilt angle of the stylus pen 102 increased.

In this way, the electronic device may further display information about the second objects that are hidden by the first object based on the change in tilt of the stylus pen. Furthermore, when the first object includes multiple overlapping widgets, the electronic device may spread out and provide the overlapping widgets based on the change in the tilt of the stylus pen of the pen without the need to execute the widgets.

According to an embodiment, the amount of information included in the second objects may vary depending on the tilt angle of the stylus pen. According to an embodiment, an example in which the amount of information included in the second objects varies depending on the tilt angle of the stylus pen will be described in more detail below with reference to FIG. 8B.

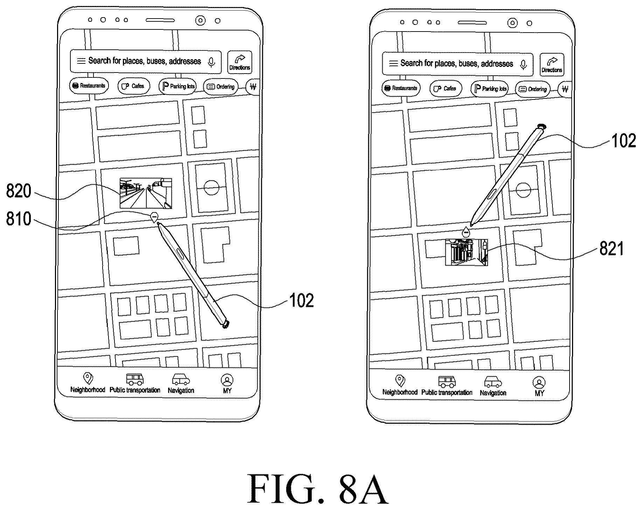

FIG. 8A illustrates the operation of an electronic device based on the tilt direction of a stylus pen according to an embodiment.

Referring to FIG. 8A, the electronic device (e.g., the electronic device 101 in FIG. 1 or the processor 120 in FIG. 1) may display second objects 820 and 821 related to a first object 810 (e.g., an object corresponding to a specific place) included in a map application execution screen displayed on a display (e.g., the display module 160 in FIG. 1) based on the tilt of a stylus pen 102 (e.g., the electronic device 102 in FIG. 1, the stylus pen 201 in FIG. 2, and the stylus pen 201 in FIG. 3) being included in a first range while a first input of the stylus pen 102 hovering over or touching the first object 810 is maintained.

According to an embodiment, the electronic device may further consider the tilt direction of the stylus pen 102 to determine positions where the second objects 820 and 821 are displayed. For example, the electronic device may display the second objects 820 and 821 in regions in a direction opposite to the tilt direction of the stylus pen 102.

For example, when the tilt direction of the stylus pen 102 is a downward direction with respect to the first object 810, the electronic device may display the second object 820 related to the first object 810 above the first object 810. For example, the second object 820 may include information about a place located in an upward direction of the first object 810.

According to an embodiment, when the tilt direction of the stylus pen 102 is an upward direction with respect to the first object 810, the electronic device may display the second object 821 related to the first object 810 below the first object 810. For example, the second object 821 may include information about a place located in a downward direction of the first object 810.

FIG. 8B illustrates the operation of an electronic device based on the tilt angle of a stylus pen according to an embodiment.

Referring to FIG. 8B, the electronic device may adjust the amount of information included in the second object based on a change in the tilt angle of the stylus pen 102.

For example, when the tilt direction of the stylus pen 102 is an upward direction with respect to the first object, and when the tilt angle is a first range 81, the electronic device may display the second object 821 that includes brief information (e.g., a representative photo) of a place located in the downward direction of the first object.

According to an embodiment, when the tilt angle of the stylus pen 102 changes from the first range 81 to a second range 82 that is greater than the first range 81, the electronic device may further display details (e.g., a store name, address information, whether the place is open, a phone connection UI, and/or a map display UI) of the place located in the downward direction the first object.

According to an embodiment, when the tilt angle of the stylus pen 102 is changed from the second range 82 to the first range 81 that is smaller than the second range 82, the electronic device may delete the details of the place located in the downward direction of the first object and display only the brief information.

In this way, the electronic device may maintain the current screen and provide more detailed information, based on the change in tilt of the stylus pen, without switching to a screen related to the first object.

FIG. 8B illustrates only the content in which the amount of information is adjusted according to a change in the tilt of the stylus pen. However, in combination with the embodiments in FIGS. 7B and 7C, as the tilt of the stylus pen increases, the second object with the increased amount of information may be moved farther away from the first object.

FIG. 9 illustrates the operation of an electronic device based on the direction and angle of tilt of a stylus pen according to an embodiment.

Referring to FIG. 9, an electronic device 101 (e.g., the electronic device 101 in FIG. 1 or the processor 120 in FIG. 1) may display a second object 920 related to a first object 910 (e.g., an icon for executing an application) displayed on a display (e.g., the display module 160 in FIG. 1) based on a stylus pen 102 (e.g., the electronic device 102 in FIG. 1, the stylus pen 201 in FIG. 2, and the stylus pen 201 in FIG. 3) being included in a first range 91 while a first input of the stylus pen 102 hovering over or touching the first object 910 is maintained.

According to an embodiment, the electronic device may further consider the tilt direction of the stylus pen 102 to determine a position where the second object 920 is displayed. For example, the electronic device may display the second object 920 in a region in a direction opposite to the tilt direction of the stylus pen 102. For example, the second object 920 may be a pop-up screen that includes a preview and/or an option menu related to the first object 910.

According to an embodiment, the electronic device may adjust the transparency of the second object 920 based on a change in the tilt angle of the stylus pen 102.

For example, when the tilt angle of the stylus pen 102 changes from the first range 91 to a second range 92 that is greater than the first range 91, the electronic device may display a second object 921 with increased transparency.

In this way, the electronic device may adjust the transparency of the second object as the tilt angle of the stylus pen 102 changes, thereby providing a screen, which has been hidden from view by the second object, without moving the position of the second object.

According to an embodiment, when the second object 920 includes multiple selectable items, the electronic device may perform, based on the tilt of the stylus pen 102, at least one of selecting an item or adjusting the transparency of the second object 920.

For example, in the case where the multiple selectable items are arranged vertically in the second object 920, when the direction of the tilt of the stylus pen 102 is the upward/downward direction, the electronic device may move an indicator, which indicates an item to be selected and is displayed on the second object 920, upward and downward based on the angle of the tilt of the stylus pen 102. According to an embodiment, when the direction of the tilt of the stylus pen 102 is a leftward/rightward direction, the electronic device may adjust the transparency of the second object 920 based on the angle of the tilt of the stylus pen 102.

According to an embodiment, in the case where the multiple selectable items are arranged horizontally in the second object 920, when the direction of the tilt of the stylus pen 102 is a leftward/rightward direction, the electronic device may move an indicator, which indicates an item to be selected and is displayed on the second object 920, leftward and rightward based on the angle of the tilt of the stylus pen 102. According to an embodiment, when the direction of the tilt of the stylus pen 102 is an upward/downward direction, the electronic device may adjust the transparency of the second object 920 based on the angle of the tilt of the stylus pen 102.

FIG. 9 illustrates only the content in which the transparency of the second object is adjusted according to a change in the tilt of the stylus pen. However, in combination with the embodiments in FIGS. 7B and 7C, as the tilt of the stylus pen increases, the second object with the increased transparency may be moved farther away from the first object.

According to an embodiment, the embodiment in FIG. 9 may be combined with the embodiment in FIG. 8, so that as the tilt of the stylus pen increases, the amount of information in the second object may increase and the transparency of the second object may increase.

In an embodiment, the embodiment in FIG. 9 may be combined with the embodiments in FIGS. 7B, 7C, and 8, so that as the tilt of the stylus pen increases, the second object with an increased amount of information and increased transparency may be moved farther away from the first object.

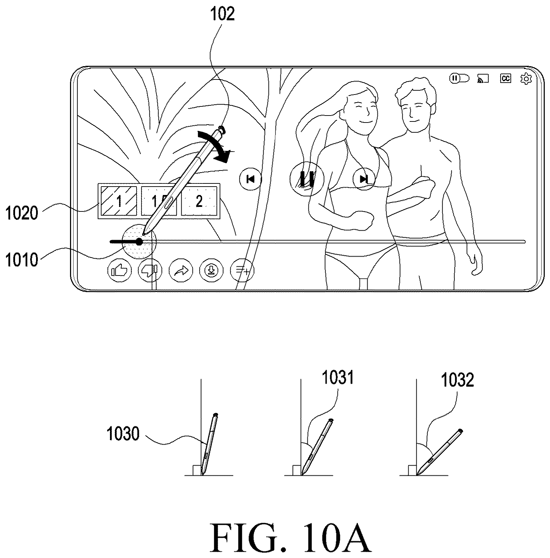

FIG. 10A illustrates the operation of an electronic device based on the direction and angle of tilt of a stylus pen according to an embodiment.

Referring to FIG. 10A, the electronic device (e.g., the electronic device 101 in FIG. 1 or the processor 120 in FIG. 1) may display a second object 1020 related to a first object 1010 (e.g., a playback knob) included in a video application execution screen displayed on a display (e.g., the display module 160 in FIG. 1) based on the tilt of a stylus pen 102 (e.g., the electronic device 102 in FIG. 1, the stylus pen 201 in FIG. 2, and the stylus pen 201 in FIG. 3) being included in a first range 1030 while a first input of the stylus pen 102 hovering over or touching the first object 1010 is maintained.

According to an embodiment, a second object 1020 may be a pop-up screen that includes multiple options related to the first object 1010. For example, based on the first object 1010 being a playback knob, the second object 1020 may include options (e.g., playback speed x1, playback speed x1.5, and playback speed x2) related to multiple playback speeds.

According to an embodiment, the electronic device may select one of the multiple options included in the second object 1020 based on a change in the tilt angle of the stylus pen 102. For example, when the stylus pen 102 is tilted in a rightward direction by the clockwise rotation thereof, the electronic device may move an indicator, which indicates an option to be selected from the multiple options, to the right, and when the stylus pen 102 is tilted in a leftward direction by the counterclockwise rotation thereof, the electronic device may move the indicator, which indicates the option to be selected from the multiple options, to the left.

For example, when the tilt angle of the stylus pen 102 changes from the first range 1030 to a second range 1031 that is greater than the first range 1030, the electronic device may move the indicator from playback speed x1 to playback speed x1.5. According to an embodiment, when the tilt angle of the stylus pen 102 changes from the second range 1031 to a third range 1032 that is greater than the second range 1031, the electronic device may move the indicator from playback speed x1.5 to playback speed x2.

FIG. 10B illustrates the operation of an electronic device based on the direction and angle of tilt of a stylus pen according to an embodiment.

Referring to FIG. 10B, the electronic device may adjust setting values related to a first object 1040 (e.g., a brightness adjustment UI, a volume adjustment UI, or a playback knob) included in the video application execution screen displayed on the display by adjusting the tilt angle of the stylus pen 102 while a first input of the stylus pen 102 hovering over or touching the first object 1040 is maintained.

For example, when the first object 1040 is a user interface related to brightness adjustment, the electronic device may adjust the screen brightness based on a change in the tilt of the stylus pen 102 while the first input of the stylus pen 102 hovering over or touching the first object 1040 is maintained.

For example, the electronic device may maintain the current brightness when the tilt angle of the stylus pen 102 is a first range 1051. According to an embodiment, the electronic device may adjust the screen brightness to be brighter when the tilt direction of the stylus pen 102 is rightward or upward and the tilt angle changes to a second range 1052 that is greater than the first range 1051. According to an embodiment, the electronic device may adjust the screen brightness to be darker when the tilt direction of the stylus pen 102 is leftward or downward and the tilt angle changes to a third range 1050 that is greater than the first range 1051.

According to an embodiment, the electronic device may display a second object related to the first object 1040 when the tilt angle of the stylus pen 102 is included in the first range 1051 while the first input of the stylus pen 102 hovering over or touching the first object 1040 is maintained. For example, the second object may include a slider related to a setting value, or an adjusted setting value (e.g., a numerical value).

According to an embodiment, when the first object 1040 is a user interface related to volume adjustment, the electronic device may adjust the volume based on a change in the tilt angle of the stylus pen 102. According to an embodiment, when the first object 1040 is a user interface related to a current playback portion of a video, the electronic device may adjust the playback portion of the video based on a change in the tilt angle of the stylus pen 102.

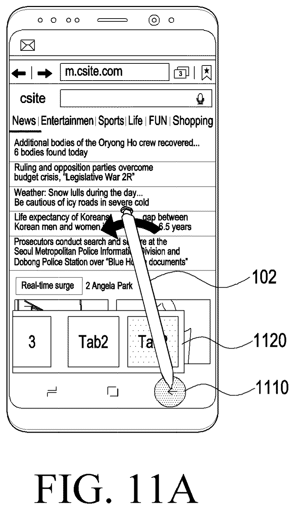

FIG. 11A illustrates the operation of an electronic device based on the direction and angle of tilt of a stylus pen according to an embodiment.

Referring to FIG. 11A, the electronic device (e.g., the electronic device 101 in FIG. 1 or the processor 120 in FIG. 1) may display a second object 1120 related to a first object 1110 (e.g., a back key) included in a browser application execution screen displayed on a display (e.g., the display module 160 in FIG. 1) based on the tilt of a stylus pen 102 (e.g., the electronic device 102 in FIG. 1, the stylus pen 201 in FIG. 2, and the stylus pen 201 in FIG. 3) being included in a first range while a first input of the stylus pen 102 hovering over or touching the first object 1110 is maintained.

According to an embodiment, the second object 1120 may be a pop-up screen that includes multiple options related to the first object 1110. For example, based on the first object 1110 being a back key for displaying a previous screen, the second object 1120 may include options (e.g., tab 1, tab 2, and tab 3) related to multiple previous screens.

According to an embodiment, the electronic device may select one of the multiple options included in the second object 1120, based on a change in the tilt angle of the stylus pen 102. For example, when the stylus pen 102 is tilted in a rightward direction by the clockwise rotation thereof, the electronic device may move an indicator, which indicates an option to be selected from among the multiple options, to the right, and when the stylus pen 102 is tilted in a leftward direction by the counterclockwise rotation thereof, the electronic device may move the indicator, which indicates the option to be selected from among the multiple options, to the left.

According to an embodiment, the electronic device may move the indicator to an option corresponding to a previous screen as the tilt of the stylus pen 102 increases.

According to an embodiment, when the first input is released, the electronic device may display a screen corresponding to the option for which the indicator was displayed while the first input was maintained.

According to an embodiment, when the input of pressing a button on the stylus pen 102 or the input of pressing a button on the electronic device is received while the first input is maintained, the electronic device may display a screen corresponding to the option for which the indicator was displayed.

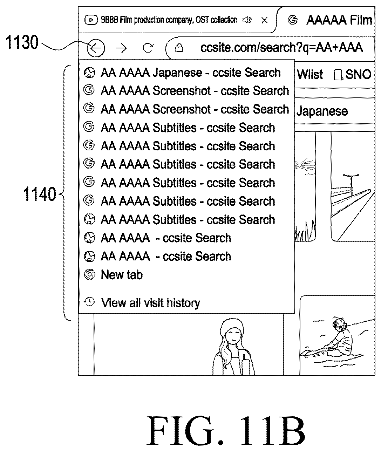

FIG. 11B illustrates the operation of an electronic device based on the direction and angle of tilt of a stylus pen according to an embodiment.

Referring to FIG. 11B, the electronic device may display a second object 1140 related to a first object 1130 (e.g., a back key) included in a browser execution screen displayed on the display based on the tilt of the stylus pen 102 being included in a first range while a first input of the stylus pen 102 hovering over or touching the first object 1130 is maintained. For example, the second object 1120 may include options related to multiple previous screens, and each option may include a tab name of a previous screen.

According to an embodiment, the electronic device may select one of the multiple options included in the second object 1140 based on a change in the tilt angle of the stylus pen 102. For example, when the stylus pen 102 is tilted in an upward direction, the electronic device may move an indicator, which indicates an option to be selected from the multiple options, upward, and when the stylus pen 102 is tilted in a downward direction, the electronic device may move the indicator, which indicates the option to be selected from the multiple options, downward.

According to an embodiment, when the first input is released, the electronic device may display a screen corresponding to an option for which the indicator was displayed while the first input was maintained.

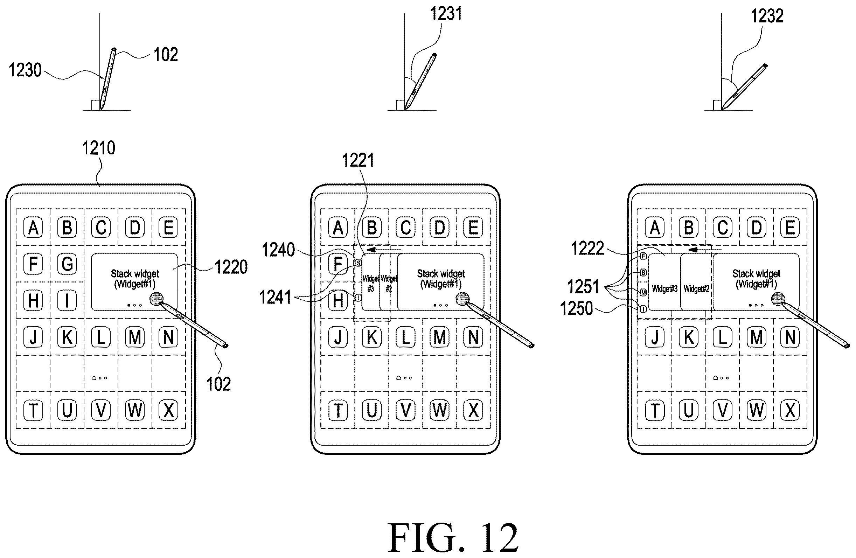

FIG. 12 illustrates the operation of an electronic device based on the direction and angle of tilt of a stylus pen according to an embodiment.

Referring to FIG. 12, the electronic device (e.g., the electronic device 101 in FIG. 1 or the processor 120 in FIG. 1) may display a screen 1210 including at least one icon (e.g., A, B, C, ... , X) and a widget 1220 on a display (e.g., the display module 160 in FIG. 1). According to an embodiment, the screen 1210 may be a home screen.

According to an embodiment, the at least one icon and widget 1220 included on the home screen may be arranged in a grid form. According to an embodiment, the widget 1220 may be disposed in a region where one or more grid regions are merged. According to an embodiment, the grid form is illustrated in FIG. 12 for convenience of description, but the grid may not be displayed in actual implementations.

In an embodiment, the widget (1220) may be a stack widget where multiple widgets overlap each other in a stack form to form multiple layers.

For example, the widget 1220 may be a stack widget having three widgets overlapping each other in a stack form.

According to an embodiment, the electronic device may display at least one object 1221 related to the widget 1220 when the tilt angle of a stylus pen 102 (e.g., the electronic device 102 in FIG. 1, the stylus pen 201 in FIG. 2, and the stylus pen 201 in FIG. 3) changes from a first range 1230 to a second range 1231 while the electronic device receives an input of touching or hovering over the widget 1220 with the stylus pen 102. According to an embodiment, the tilt angle of the stylus pen 102 may be an angle between the direction of a display plane and the stylus pen 102. For example, the direction of the display plane may be a direction orthogonal to all straight lines included in the display plane.

According to an embodiment, the electronic device may display the at least one object 1221 in a direction opposite to the direction in which the stylus pen 102 is tilted. For example, when the stylus pen 102 is tilted to the right so that the angle is included in the second range 1231, the electronic device may display, on the left side of the widget 1220, at least one layer 1221 (e.g., a second widget or a third widget) that was hidden from view by the topmost layer (e.g., a first widget) of the widget 1220. According to an embodiment, when the at least one layer 1221 related to the widget 1220 is displayed in a first region 1240 which is to the left of the widget 1220 and in which a "G" icon and a "I" icon were displayed, the electronic device may reduce the sizes of the "G" icon and the "I" icon that were displayed in the first region 1240, and may display the -reduced-size "G" icon and "I" icon 1241 on the left side of a region in the first region 1240 where the at least one layer 1221 was displayed.

According to an embodiment, when the tilt angle of the stylus pen 102 changes from the second range 1231 to the first range 1230, or when the touching or hovering with the stylus pen 102 is released, the electronic device may restore the sizes and display positions of the reduced-size "G" icon and the "I" icon 1241.

According to an embodiment, based on a change in the tilt angle of the stylus pen 102, the electronic device may increase the size of the at least one layer 1221 related to the widget 1220.

For example, when the tilt angle of the stylus pen 102 changes from the second range 1231 to a third range 1232 that is greater than the second range 1231, the electronic device may move the at least one layer 1221 related to the widget 1220 to the left so that the at least one layer 1221 is farther away from the widget 1220.

For example, when the stylus pen 102 is tilted to the right so that the angle is included in the third range 1232, and when at least one layer 1222 related to the widget 1220 is displayed in the first region 1240, which is to the left of the widget 1220 and in which the "G" icon and the "I" icon were displayed, and a second region 1250 which is to the left of the first region 1240 and in which an "F' icon and an "H" icon were displayed, the electronic device may reduce the sizes of the "G" icon and the "I" icon, which were displayed in the first region 1240, and the sizes of the "F" icon and the "H" icon, which were displayed in the second region 1250, and may display the reduced-sized "G" icon, "I" icon, "F" icon, and "H" icon 1251 on the left side of a region in the second region 1250 where the at least one layer 1222 is displayed.

According to an embodiment, when the tilt angle of the stylus pen 102 changes from the third range 1232 to the second range 1231, the electronic device may reduce the size of the at least one layer 1222 related to the widget 1220 to display the same in the first region 1240, and may restore the sizes and display positions of the reduced-size "F" icon and "H" icon. In an embodiment, the reduced-size "G" icon and "I" icon may be reduced and displayed on the left side of the at least one layer 1221 related to the widget 1220 in the first region 1240.

According to an embodiment, when the tilt angle of the stylus pen 102 changes from the third range 1232 to the first range 1230, or when the touching or hovering with the stylus pen 102 is released, the electronic device may restore the sizes and display positions of the reduced-size "G" icon, "I" icon, "F" icon, and "H" icon 1251.

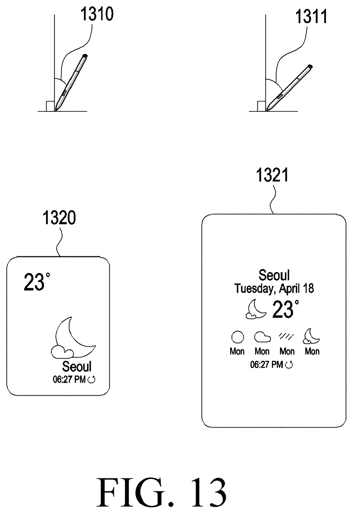

FIG. 13 illustrates the operation of an electronic device based on the direction and angle of tilt of a stylus pen according to an embodiment.

Referring to FIG. 13, the electronic device (e.g., the electronic device 101 in FIG. 1 or the processor 120 in FIG. 1) may display a first object 1320 including a single layer on a display (e.g., the display module 160 in FIG. 1). For example, the first object 1320 may include a widget displayed on a home screen. For example, the first object 1320 may include brief information including temperature information at the current location, current time information, and weather information.

According to an embodiment, the electronic device may adjust the amount of information included in the first object 1320, based on a change in the tilt angle of a stylus pen 102 (e.g., the electronic device 102 in FIG. 1, the stylus pen 201 in FIG. 2, and the stylus pen 201 in FIG. 3) while a first input of touching or hovering over the first object 1320 by the stylus pen 102 is maintained.

For example, when the tilt angle of the stylus pen 102 changes from a first range 1310 to a second range 1311, the electronic device may change the first object 1320 including the brief information to a second object 1321 including detailed information. For example, the second object 1321 may include date information and weather forecast information for each day of the week, in addition to current temperature information, current location information, current time information, and weather information. In an embodiment, the size of the second object 1321 may be larger than the size of the first object 1320.

According to an embodiment, when, on the home screen, an object is increased in size and displayed in a region where icons are pre-arranged, the electronic device may reduce the size of the previously displayed icons and display the icons around the object increased in size, as illustrated in FIG. 12.

According to an embodiment, when the tilt angle of the stylus pen 102 changes from the second range 1311 to the first range 1310 that is smaller than the second range 1311, the electronic device may change the second object 1321 including the detailed information to the first object 1320 including the brief information.

In this way, the electronic device may provide more detailed information while maintaining the current screen, based on the change in tilt of the stylus pen, without switching to a screen related to the first object.

According to an embodiment, an electronic device (e.g., the electronic device 101 in FIG. 1) may include a display (e.g., the display 160 in FIG. 1) and at least one processor (e.g., the processor 120 in FIG. 1) electrically connected to the display.

According to an embodiment, the at least one processor may display a first object via the display.

According to an embodiment, the at least one processor may detect a first input of a stylus pen (e.g., the electronic device 102 in FIG. 1, the stylus pen 201 in FIG. 2, and the stylus pen 201 in FIG. 3) regarding the first object.

According to an embodiment, the at least one processor may obtain a first tilt of the stylus pen while the first input is maintained.

According to an embodiment, the at least one processor may further display a second object related to the first object, based on the first tilt being included in a first range.

According to an embodiment, the electronic device may further include a communication module (e.g., the communication module 190 in FIG. 1).

According to an embodiment, the at least one processor may receive information about at least one of a direction of the first tilt or an angle of the first tilt from the stylus pen connected via the communication module.

According to an embodiment, the electronic device may further include at least one sensor (e.g., the sensor module 176 in FIG. 1).

According to an embodiment, the at least one processor may obtain, based on the at least one sensor, at least one of the direction of the first tilt or the angle of the first tilt of the stylus pen.

According to an embodiment, the angle of the first tilt may include an angle between the stylus pen and a direction faced by the surface of the display.

According to an embodiment, the at least one processor may increase the amount of content included in the second object based on the angle of the first tilt changing to be included in a second range greater than the first range.

According to an embodiment, the at least one processor may move the second object to be farther away from the first object, based on the angle of the first tilt changing to be included in a second range greater than the first range.

According to an embodiment, the at least one processor may increase the transparency of the second object, based on the angle of the first tilt changing to be included in a second range greater than the first range.

According to an embodiment, the second object may include multiple optionally selectable items.

According to an embodiment, the at least one processor may change an item to be selected from among the multiple items, based on a change in at least one of the angle of the first tilt or the direction of the first tilt.

According to an embodiment, the first object may relate to a setting having an adjustable value.

According to an embodiment, the at least one processor may adjust a value of the setting, based on a change in at least one of the angle of the first tilt or the direction of the first tilt, and display the second object related to the adjusted value of the setting.

According to an embodiment, the second object may be displayed on a different layer from the first object.

According to an embodiment, the at least one processor may display the second object in a region in a direction opposite to the direction of the first tilt of the stylus pen with respect to a position of the first object.

According to an embodiment, a method for controlling an electronic device may include displaying a first object.

According to an embodiment, the method of controlling the electronic device may include detecting a first input of a stylus pen regarding the first object.

According to an embodiment, the method for controlling the electronic device may include obtaining a first tilt of the stylus pen while the first input is maintained.

According to an embodiment, the method for controlling the electronic device may include further displaying a second object related to the first object, based on the first tilt being included in a first range.

According to an embodiment, in the obtaining of the first tilt of the stylus pen, information about at least one of a direction of the first tilt or an angle of the first tilt may be received from the stylus pen connected via a communication module of the electronic device.

According to an embodiment, in the obtaining of the first tilt of the stylus pen, at least one of the direction of the first tilt or the angle of the first tilt of the stylus pen may be obtained based on at least one sensor of the electronic device.

According to an embodiment, the angle of the first tilt may include an angle between the stylus pen and a direction faced by the surface of the display.

According to an embodiment, the method for controlling the electronic device may further include increasing the amount of content included in the second object, based on the angle of the first tilt changing to be included in a second range greater than the first range.

According to an embodiment, the method for controlling the electronic device may further include moving the second object to be farther away from the first object, based on the angle of the first tilt changing to be included in a second range greater than the first range.

According to an embodiment, the method for controlling the electronic device may further include increasing the transparency of the second object based on the angle of the first tilt changing to be included in a second range greater than the first range.

According to an embodiment, the second object may include multiple optionally selectable items.

According to an embodiment, the method for controlling the electronic device may further include changing an item to be selected from among the multiple items, based on a change in at least one of the angle of the first tilt or the direction of the first tilt.

According to an embodiment, the first object may relate to a setting having an adjustable value.

According to an embodiment, the method for controlling the electronic device may further include adjusting a value of the setting, based on a change in at least one of the angle of the first tilt or the direction of the first tilt.

According to an embodiment, the method of controlling the electronic device may further include displaying the second object related to the adjusted value of the setting.

According to an embodiment, the second object may be displayed on a different layer from the first object.

According to an embodiment, in the further displaying of the second object, the second object may be displayed in a region in a direction opposite to the direction of the first tilt of the stylus pen with respect to a position of the first object.

According to an embodiment, in a non-transitory computer-readable recording medium storing one or more programs, the one or more programs may include instructions which cause an electronic device including a display and at least one processor to display a first object via the display.

According to an embodiment, the one or more programs may include instructions which cause the electronic device to detect a first input of the stylus pen regarding the first object.

According to an embodiment, the one or more programs may include instructions which cause the electronic device to obtain a first tilt of the stylus pen while the first input is maintained.

According to an embodiment, the one or more programs may include instructions which cause the electronic device to further display a second object related to the first object, based on the first tilt being included in in a first range.

According to an embodiment, the one or more programs may include instructions which cause the electronic device to receive information about at least one of a direction of the first tilt or an angle of the first tilt from the stylus pen connected via a communication module of the electronic device.

According to an embodiment, the electronic device may further include at least one sensor.

According to an embodiment, the one or more programs may include instructions which cause the electronic device to obtain, based on the at least one sensor, at least one of the direction of the first tilt or the angle of the first tilt of the stylus pen.

According to an embodiment, the angle of the first tilt may include an angle between the stylus pen and a direction faced by the surface of the display.

According to an embodiment, the one or more programs may include instructions which cause the electronic device to increase the amount of content included in the second object, based on the angle of the first tilt changing to be included in a second range greater than the first range.

According to an embodiment, the one or more programs may include instructions which cause the electronic device to move the second object to be father away from the first object, based on the angle of the first tilt changing to be included in a second range greater than the first range.

According to an embodiment, the one or more programs may include instructions which cause the electronic device to increase the transparency of the second object, based on the angle of the first tilt changing to be included in a second range greater than the first range.

According to an embodiment, the second object may include multiple optionally selectable items.

According to an embodiment, the one or more programs may include instructions which cause the electronic device to change an item to be selected from among the multiple items, based on a change in at least one of the angle of the first tilt or the direction of the first tilt.

According to an embodiment, the first object may relate to a setting having an adjustable value.

According to an embodiment, the one or more programs may include instructions which cause the electronic device to adjust a value of the setting, based on a change in at least one of the angle of the first tilt or the direction of the first tilt, and to display a second object related to the adjusted value of the setting.

According to an embodiment, the second object may be displayed on a different layer from the first object.

According to an embodiment, the one or more programs may include instructions which cause the electronic device to display the second object in a region in a direction opposite to the direction of the first tilt of the stylus pen with respect to a position of the first object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (160);
a processor (120); and
memory configured to store instructions which, when executed by the processor, cause the electronic device to
display a first object via the display,
detect a first input of a stylus pen (102, 201) regarding the first object,
obtain a first tilt of the stylus pen while the first input is maintained, and
further display a second object related to the first object, based on the first tilt being included in a first range.

2. The electronic device of claim 1, further comprising a communication module (190),
wherein the instructions are configured to cause the electronic device to receive information about at least one of a direction of the first tilt or an angle of the first tilt from the stylus pen connected via the communication module.

3. The electronic device of claim 1 or 2, further comprising at least one sensor (176),
wherein the instructions are configured to cause the electronic device to obtain, based on the at least one sensor, at least one of the direction of the first tilt or the angle of the first tilt of the stylus pen.

4. The electronic device of one of claims 1 to 3, wherein the angle of the first tilt comprises an angle between the stylus pen and a direction faced by a surface of the display, and
wherein the instructions are configured to cause the electronic device to increase the amount of content included in the second object, based on the angle of the first tilt changing to be included in a second range greater than the first range.

5. The electronic device of one of claims 1 to 4, wherein the angle of the first tilt comprises an angle between the stylus pen and a direction faced by the surface of the display, and
wherein the instructions are configured to cause the electronic device to move the second object to be farther away from the first object, based on the angle of the first tilt changing to be included in a second range greater than the first range.

6. The electronic device of one of claims 1 to 5, wherein the angle of the first tilt comprises an angle between the stylus pen and a direction faced by the surface of the display, and
wherein the instructions are configured to cause the electronic device to increase transparency of the second object, based on the angle of the first tilt changing to be included in a second range greater than the first range.

7. The electronic device of one of claims 1 to 3, wherein the second object comprises multiple optionally selectable items, and
wherein the instructions are configured to cause the electronic device to change an item to be selected from among the multiple items, based on a change in at least one of the angle of the first tilt or the direction of the first tilt.

8. The electronic device of one of claims 1 to 3, wherein the first object relates to a setting having an adjustable value, and
wherein the instructions are configured to cause the electronic device to adjust a value of the setting, based on a change in at least one of the angle of the first tilt or the direction of the first tilt, and display the second object related to the adjusted value of the setting.

9. The electronic device of one of claims 1 to 8, wherein the second object is displayed on a different layer from the first object.

10. The electronic device of one of claims 1 to 9, wherein the instructions are configured to cause the electronic device to display the second object in a region in a direction opposite to the direction of the first tilt of the stylus pen with respect to a position of the first object.

11. A method for controlling an electronic device, the method comprising:
displaying a first object;
detecting a first input of a stylus pen regarding the first object;
obtaining a first tilt of the stylus pen while the first input is maintained; and
further displaying a second object related to the first object, based on the first tilt being included in a first range.

12. The method of claim 11, wherein the obtaining of the first tilt of the stylus pen comprises receiving information about at least one of a direction of the first tilt or an angle of the first tilt, from the stylus pen connected via a communication module of the electronic device.

13. The method of claim 11 or 12, wherein the obtaining of the first tilt of the stylus pen comprises obtaining at least one of the direction of the first tilt or the angle of the first tilt of the stylus pen, based on at least one sensor of the electronic device.

14. The method of one of claims 11 to 13, wherein the angle of the first tilt comprises an angle between the stylus pen and a direction faced by a surface of a display, and
wherein the method further comprises increasing the amount of content included in the second object, based on the angle of the first tilt changing to be included in a second range greater than the first range.

15. The method of one of claims 11 to 14, wherein the angle of the first tilt comprises an angle between the stylus pen and a direction faced by the surface of the display, and
wherein the method further comprises moving the second object to be farther away from the first object, based on the angle of the first tilt changing to be included in a second range greater than the first range.
